# EUROPÄISCHE PATENTSCHRIFT

(11) **EP 1 144 836 B1**
(45) Veröffentlichungstag und Bekanntmachung des Hinweises auf die Patenterteilung: **23.07.2003**
(21) Anmeldenummer: 99966893.2
(22) Anmeldetag: 22.12.1999
(51) Int. Cl.: F02K 9/64

(54) **BRENNKAMMER-KÜHLSTRUKTUR FÜR EIN RAKETENTRIEBWERK**
COMBUSTION CHAMBER COOLING STRUCTURE FOR A ROCKET ENGINE
STRUCTURE DE REFROIDISSEMENT DE CHAMBRE DE COMBUSTION POUR MOTEUR-FUSEE

(30) Priorität: 18.01.1999 DE 19901422
(43) Veröffentlichungstag der Anmeldung: 17.10.2001
(73) Patentinhaber: Astrium GmbH, 81663 München (DE)
(72) Erfinder: PRECLIK, Dieter, D-81827 München (DE); NEUNER, Fritz, D-83714 Miesbach (DE); FRÖHLICH, Thomas, D-85652 Pliening (DE)
(74) Vertreter: Ulrich, Thomas
(86) Internationale Anmeldenummer: DE9904068
(87) Internationale Veröffentlichungsnummer: WO00042310

(56) Entgegenhaltungen:
- DE-A- 2 406 976
- DE-B- 1 118 539
- DE-B- 1 135 405
- US-A- 3 066 702
- US-A- 3 738 916
- US-A- 5 221 045
- US-A- 5 467 528

## Beschreibung

Die Erfindung betrifft die Brennkammer-Kühlstmktur für ein Raketentriebwerk.

Zur Erhöhung der Kühlmittelaufheizung in regenerativ gekühlten Raketenbrennkammem sind auf der Heißgasseite der Raketenbrennkammer-Wand nach dem Stand der Technik entweder ungekühlte Längsrippen oder aus mehreren Einzelröhrchen aufgebaute Brennkammer-Strukturen bekannt. Für Hochdruck-Brennkammem sind - wegen der generell hohen Wärmebelastung der Brennkammerwand - hochleitende Werkstoffe, beispielsweise Kupfer oder entsprechende Kupferlegierungen, notwendig.

Bei dem Ansatz über ungekühlte Längsrippen in der Heißgaswand ist die Höhe der Rippen und damit der Zugewinn an abführbarer Wärmemenge wegen der thermischen Belastung der Rippe sehr stark begrenzt. Was die Bauweise mit Röhrchen anbelangt, ist aus rein geometrischen Betrachtungen heraus die maximal erzielbare Oberflächenerhöhung und damit der Wärmeaustausch ebenfalls erheblich eingeschränkt. Beide Ansätze aus dem Stand der Technik haben daher den Nachteil, daß die an das Kühlmittel abführbare Wärmemenge unbefriedigend ist.

Aus DE 24 06 976 ist bekannt, Kühlkanäle in Dachrinnenform durch eine galvanoplastische Abscheidung herzustellen. Diese Kühlkanäle werden dann an ihrer offenen Seite durch eine weitere Galvanikschicht abgedeckt. Dadurch entstehen Rippen mit einer wellenförmig gewölbten Struktur, wobei diese Struktur die Kühlkanäle umschließt und von einer Außenschicht abgeschlossen wird. Die gewölbte Struktur, die die Kühlkanäle umschließt, ist in ihrer gesamten Erstreckung und insbesondere auch im Bereich der Außenschicht nur relativ dünn ausgebildet, wodurch nur eine geringe mechanische Festigkeit der Struktur erzielt wird. Überdies liegen die einzelnen Kühlkanäle relativ weit auseinander, so dass keine optimale Kühlung der gesamten Brennkammer-Struktur erreicht wird. Auch der erreichte Wärmeeintrag in das Kühlmittel ist damit noch zu gering.

DE 1 135 405 beschreibt eine Raketenbrennkammer, die aus mehreren konzentrisch ineinander geschobenen Rohren besteht, die in regelmäßigen Abständen in Längsrichtung unter Bildung von Längsnähten miteinander verschweißt sind. Unter Druck werden sodann die verbleibenden Zwischenräume durch Deformation zu Kühlkanälen aufgeweitet. Solche Strukturen sind jedoch mechanisch kaum belastbar und gerade die Längsnähte stellen einen besonderen Schwachpunkt der Konstruktion angesichts der hohen Belastungen dar, denen eine solche Raketenbrennkammer ausgesetzt ist. Werden insbesondere drei Rohre konzentrisch zueinander angordnet und miteinander verschweisst, so sind zwar prinzipiell Kühlkanäle in mehreren Ebenen möglich. Die weiter vom der Brennkammer-Innenraum entfernt liegenden Kanäle dienen jedoch lediglich der Kühlung der Längsnähte. Eine Erhöhung des Wärmeeintrages in das Kühlmittel kann damit aber nicht effektiv erreicht werden, da die Kühlkanäle nicht in direktem Wärmeaustausch mit den heißen Brennkammergasen stehen. Schließlich kann die Form der Kühlkanäle nicht gezielt beeinflusst werden. Sie ist durch die sich automatisch ergebende Deformation vorgegeben. Damit kann kaum eine Optimierung der Kühleigenschaften der Kühlkanäle durch eine gezielte Beeinflussung der Form der Kühlkanäle und ihrer Umhüllung erfolgen.

US 5,221,045 beschreibt eine ähnliche Technik wie die vorgenannte DE 1,135,405, wobei ebenfalls miteinander abschnittsweißte verschweißte konzentrische Rohre durch Deformation zu Kühlkanälen aufgeweitet werden. Auch hier ergeben sich die bereits erwähnten Probleme hinsichtlich der mechanischen Belastbarkeit und der Einschränkungen hinsichtlich der Formgebung der Kühlkanäle.

Die Erfindung hat daher die Aufgabe, Maßnahmen vorzuschlagen, mit denen der über die Brennkammerstruktur erzielbare Wärmeaustausch mit dem Kühlmittelfluid weitergehend verbessert werden kann und gleichzeitig eine ausreichende mechanische Festigkeit und weitgehende Variabilität der speziellen Ausgestaltung der Struktur garantiert wird. Diese Aufgabe wird mit den Merkmalen des Anspruchs 1 gelöst. Alternative Ausführungsformen sind in den Unteransprüchen angegeben.

Für bestimmte Raketentriebwerkskonzepte ist es notwendig, die über die Brennkammerstruktur dem Kühlmittel zugeführte Wärmemenge zu maximieren. Die Erfindung zielt darauf ab, diesen Wärmeaustausch durch Längsrippen, die in den Brennraum ragen und aktiv gekühlt sind, zu erhöhen. Die thermomechanische Integrität der Rippenstruktur kann durch die aktive Kühlung der Rippen auch bei hohen Rippen gewährleistet werden. Damit ist es möglich, die Größe der wärmeübertragenden Flächen der austauschbaren Wärmemenge aus den Brennkammer-Strukturen im Vergleich zum Stand der Technik zu erhöhen.

Im folgenden wird die Erfindung anhand der beigefügten Figuren beschrieben.

Es zeigen:
- Fig. 1: einen Meridianschnitt durch eine Brennkammer-Struktur mit Einspritzkopf in schematischer Darstellung,
- Fig. 2: einen Auschnitt aus der Brennkammer-Struktur der Figur 1 in perspektivischer Ansicht, und
- Fig. 3: einen schematischen Querschnitt durch die Brennkammer-Struktur mit aktiv gekühlten Rippen auf der Heißgasseite. Die Kühlkanäle verlaufen entlang der Kontur in Fig. 1.

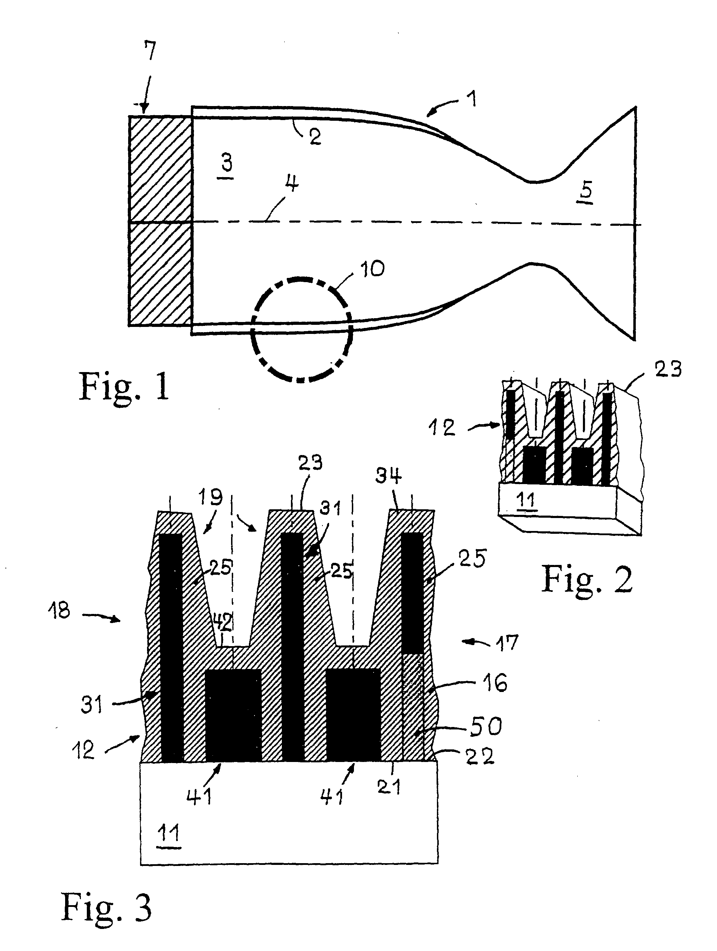

Die Fig. 1 und 2 zeigen eine Brennkammer-Struktur 1 deren Innenfläche 2 einen Brennraum 3 umgrenzt. Die Brennkammer-Struktur 1 ist rotationssymmetrisch zur Achse 4 gestaltet. Die Brennkammer 3 geht mit ihrem offenen Ende in eine Düse 5 über. Am Eintritt in die Brennkammer 3 ist ein Einspritzkopf 7 angeordnet. Das Verbrennungsgas (Heißgas) strömt entsprechend der Darstellung in Fig. 1 von links nach rechts, vor dem engsten Querschnitt mit Unterschallgeschwindigkeit und danach mit Überschallgeschwindigkeit (Lavaldüse).

in der Fig. 1 ist ein Ausschnitt 10 im Bereich der Brennkammer-Struktur 1 eingezeichnet. Der in dem Ausschnitt 10 liegende Teil der Brennkammer-Struktur 1 ist in der Fig. 2 in perspektivischer Darstellung gezeigt. Die Brennkammer-Struktur 1 umfaßt eine Außenstruktur 11 und eine Innenstruktur 12. Die Außenstruktur 11 ist kein zentraler Bestandteil dieser Erfindung. Von der Innenstruktur 12 ragt nach innen, d.h. in Richtung der Achse 4, eine Kühleinrichtung 17 hinein. Die Kühleinrichtung 17 umfaßt eine Basisstruktur 16 und eine Rippenstruktur 19.

Vorzugsweise wird die Brennkammer-Struktur 1 aus der Außenstruktur 11 und der Kühleinrichtung 17 gebildet, d.h. die Brennkammer-Struktur 1 ist ursprünglich vorzugsweise zweiteilig. Die Außenstruktur 11 besitzt eine Innenfläche 21, die der Kühleinrichtung 17 zugewandt und im integrierten Zustand mit deren Mantelfläche 22 fest verbunden ist. Zum Brennraum 3 der Brennkammer mit der Achse 4 hin weist die Kühleinrichtung 17 eine Innenkontur 23 auf, die aus mehreren einzelnen, sich in Umfangsrichtung der in Fig. 1 dargestellten Brennkammer wiederholenden, Längsrippen 25 besteht.

Die Längsrippen 25 erstrecken sich in ihrer Höhe von dem Teilkörper 18 aus zur Achse 4 der Brennkammer-Struktur 1 hin und verlaufen in ihrer Längsrichtung vorzugsweise parallel zur Achse 4. Altemativ dazu kann die Längserstreckung der Rippen 25 ringförmig oder aber schraubenförmig um die Achse 4 herum vorgesehen sein.

Vorzugsweise sind der Teilkörper 18 und die Rippen 25 zusammen einteilig ausgebildet. Innerhalb der Rippen 25 verlaufen in deren Längsrichtungen erste Kühlkanäle 31. Die Rippen verjüngen sich vorzugsweise von dem Übergang zwischen Teilkörper 18 und Rippe 25 bis zu dem freien Ende der jeweiligen Rippe 25. Der Verjüngungsgrad hängt vom Anwendungsfall ab und liegt im Bereich zwischen 10 % und 50 % der Rippendicke am Rippenfuß. Der Querschnitt der Kühlkanäle 31 erstreckt sich vorzugsweise von der Mantelfläche 22 bis zum freien Ende der jeweiligen Rippe 25. Über die durch die Rippe 25 dargestellte Wandstärke muß die im Brennraum anfallende Wandwärmemenge in das durch den Kühlkanal 31, 41 strömende Kühlmittel übertragen werden. Diese Wandstärke ergibt sich als Funktion der Wandwärmebelastung und hängt damit vom jeweiligen Anwendungsfall ab. Ohne die Außenstruktur 11 würden die ersten Kühlkanäle 31 auf der Seite der Mantelfläche 22 des Teilkörpers 18 offen sein, d.h. durch das Anordnen der Außenstruktur 11 um die Innenstruktur 12 wird das offene Ende des jeweiligen ersten Kühlkanals 31 abgedeckt. Der Kühlkanal verläuft in seiner Längsrichtung entlang der Längsrichtung der zugehörigen Rippen 25. Das Kühlfluid kann den Kühlkanal im Gleich- oder Gegenstromprinzip durchströmen.

In dem Bereich zwischen jeweils zweier Rippen 25 bzw. jeweils zweier erster Kühlkanäle 31 und im Bereich des Teilkörpers 18 sind weitere, zweite Kühlkanäle 41 vorgesehen. Diese erstrecken sich im Teilkörper 18 von der Mantelfläche 22 bis zu einem vorbestimmten Abstand des freien, der Brennkammer 3 zugewandten Endes des Teilkörpers 18, der zwischen jeweils zweier Rippen 25 gelegen ist.

Wie in der Fig. 3 gesehen werden kann, sind die zweiten Kühlkanäle 41 vorzugsweise wesentlich breiter, beispielsweise doppelt so breit wie die ersten Kühlkanäle 31 ausgebildet, um bei wesentlich niedrigerer Höhe eine ähnliche Durchflußcharakteristik, wie die ersten Kühlkanäle aufzuweisen. Weiterhin ist in der Fig. 3 in einem der dargestellten Kühlkanäle 31 ein Einsatz 50 eingezeichnet. Dieser kann optional in einem oder mehreren der Kühlkanäle 31, 41 angeordnet sein. Dabei ist der Einsatz 50 vorzugsweise in dem Teil des Kühlkanals 31, 41 gelegen, der an der Außenstruktur 11 der beiden Kammer-Struktur 1 anliegt. Ein solcher Einsatz 50 kann sowohl in einem sich in dem Bereich der Rippen 25 erstreckenden ersten Kühlkanal 31 als auch in einem sich nur bis zur freien Außenfläche 42 des Teilkörpers 18 erstreckenden zweiten Kühlkanal 41 vorgesehen sein. Das Kühlmedium fließt dann durch den Raum des jeweiligen Kühlkanals 31, 41, der von dem Einsatz 50 freigelassen wird.

Die Außenstruktur 11 hat die Funktion, sämtliche Kühlkanäle 31, 41 in radialer Richtung nach außen abzudecken sowie mechanische, und insbesondere von Drucklasten aufzunehmen. Die Ausbildung der Kühlkanäle 31, 41 sowie die Gestalt des Teilkörpers 18 und der Rippen 25 ist unabhängig von Aufbau und Werkstoff der Außenstruktur 11 sowie der Anbindung der Außenstruktur 11 an den Teilkörper 18.

Durch geeignete geometrische Auslegung der Kühleinrichtung 17, d.h. also der Struktur von Rippen 25 und Kühlkanälen 31, 41, können der Wärmeeintrag und die Kühlung aufeinander abgestimmt und auf eine vorbestimmte oder geforderte Menge hin ausgelegt werden. Insbesondere kann durch einen ausreichend großen Abstand der Rippen 25 zueinander ein Grenzschicht-Einfluß zwischen den Rippen 25 weitgehend vermieden werden, der den Wärmeübergang vom Brenngas im Brennraum 3 in die Kühleinrichtung 17 reduzieren würde.

In der Fig. 3 weisen die Kühlkanäle 31, 41 eine rechteckige Querschnittsform auf. Die Querschnittsform der Kühlkanäle 31, 41 kann jedoch alternativ dazu auch eine andere Gestalt haben. Außerdem müssen sie nicht innerhalb einer Brennkammer-Struktur 1 eine einheitliche Gestalt haben. Es können innerhalb einer Brennkammer-Struktur 1 sowohl die Kühlkanäle 31 untereinander als auch die Kühlkanäle 41 untereinander unterschiedlich ausgebildet sein. Es können innerhalb einer Rippe 25 auch mehrere erste Kühlkanäle 31 und zwischen jeweils zweier Rippen 25 auch mehrere zweite Kühlkanäle 41 angeordnet sein.

Durch Einsätze 50 kann die Kühlkanal-Höhe eingestellt werden, d.h. das Volumen des jeweiligen Kühlkanals 31, 41, das von dem Kühlmedium durchströmt werden kann. Die Einsätze müssen dabei nicht in der gesamten Längs-Erstreckung des jeweiligen Kühlkanals 31, 41 verlaufen, sondern können auch in dieser Richtung abschnittsweise vorgesehen sein. Weiterhin können die Einsätze 50 innerhalb einer Brennkammer-Struktur 1 auch unterschiedlich ausgestaltet sein. Es können jedoch alternativ zu den Einsätzen 50 auch andere Maßnahmen nach dem Stand der Technik vorgesehen sein, um den von dem Kühlmedium durchströmbaren Bereich der jeweiligen Kühlkanäle 31, 41 zu variieren oder zu begrenzen. Die hydraulische Charakteristik der Kühlkanäle 31, 41 kann im Zwischenfertigungsstatus am Bauteil selbst bestimmt und daraus ggf, erforderliche Anpassungen der Kühlkanalhöhe abgeleitet und durchgeführt werden.

Wie in den Fig. 2 und 3 dargestellt, ist die Kühleinrichtung 17, d.h. also die Struktur von Rippen 25 und Kühlkanälen 31, 41, vorzugsweise integraler Bestandteil des Brennkammer-Grundkörpers 16. Fertigungstechnisch werden sowohl die Rippen 15 als auch die Kühlkanäle 31, 41 individuell abschnittsweise in einzelnen Brennkammerabschnitten mit kontinuierlichem Übergang zu nicht betroffenen benachbarten Brennkammerabschnitten eingebracht. Als Fertigungsverfahren sind hierbei vorzugsweise mechanische oder elektroerosive Verfahren vorgesehen.

Im Gegensatz zu den Lösungsansätzen nach dem Stand der Technik ist die Kühlung nach der Erfindung durch geeignete Anpassung der Kühleinrichtung 17 optimierbar. Durch geeignete geometrische Auslegung der Rippen 25 und der Kühlkanäle 31, 41 kann der Wärmeeintrag und die Kühlung abgestimmt sowie auf ein gewünschtes Maß eingestellt werden. Durch die aktive Kühlung der Rippen kann die thermomechanische Belastung der Rippen 25 auch bei Rippen mit größerer Höhe zur Achse 4 begrenzt werden und somit in Vergleich zum Stand der Technik eine wesentliche Erhöhung der wärmeübertragenden Flächen und somit der aus dem Bereich der Brennkammerstruktur 1 abführbaren Wärmemenge erreicht werden.

## Patentansprüche

1. Brennkammer-Struktur (1) mit einer Mehrzahl von vorzugsweise in Längsrichtung der Brennkammer-Struktur (1) verlaufenden Kühlkanälen (31, 41), wobei
die Brennkammer-Struktur (1) eine Außenstruktur (11) und einen Brennkammer-Grundkörper in Form eines einteiligen Teilkörpers (18) mit Rippen (25) umfaßt, die sich in Umfangsrichtung der Brennkammer wiederholen, wobei
die Brennkammer-Struktur (1) mit Ausnahme des Teilkörpers (18) rotations-symmetrisch bezüglich einer Achse (4) ist,
in dem Inneren der Rippen (25) jeweils zumindest ein erster Kühlkanal (31) verläuft, der sich von dem von der Außenstruktur (11) abgewandten freien Ende (34) der jeweiligen Rippe (25) bis zu der äußeren Mantelfläche (22) des Teilkörpers (18) erstreckt, wobei
die Rippe (25) eine Umgrenzung des Kühlkanals (31) bildet und der Kühlkanal (31) an der Mantelfläche (22) des Teilkörpers (18) offen liegt und von der Außenstruktur (11) abgedeckt wird,
**dadurch gekennzeichnet,**
**daß** der einteilige Teilkörper (18) eine Basistruktur (16) und eine Rippenstruktur (19) umfaßt und daß in Richtung der Achse (4) der Brennkammer-Struktur (1) gesehen zwischen jeweils zwei Rippen (25) zumindest ein zweiter Kühlkanal (41) in der Basisstruktur (16) angeordnet ist, der auf der Seite der Außenstruktur (11) von dieser abgedeckt wird.

2. Brennkammer-Struktur nach dem Anspruch 1, **dadurch gekennzeichnet, daß** die Rippen (25) ring- oder schraubenförmig um die Achse (4) verlaufen.

3. Brennkammer-Struktur nach einem der Ansprüche 1 oder 2, **dadurch gekennzeichnet, daß** in zumindest einem ersten Kühlkanal (31) ein Einsatz (50) angeordnet ist, der das durchströmbare Volumen des ersten Kühlkanals (31) einschränkt.

4. Brennkammer-Struktur nach Anspruch 3, **dadurch gekennzeichnet,** in zumindest einern zweiten Kühlkanal (41) ein Einsatz (50) angeordnet ist, der das durchströmbare Volumen des zweiten Kühlkanals (41) einschränkt.

## Claims

1. Combustion chamber structure (1) having a plurality of cooling channels (31, 41) which extend preferably in the longitudinal direction of the combustion chamber structure (1),
the combustion chamber structure (1) comprising an outer structure (11) and a basic combustion chamber body in the form of a single-piece part body (18) having ribs (25) which are repeated in the circumferential direction of the combustion chamber,
the combustion chamber structure (1), with the exception of the part body (18), being rotationally symmetrical relative to an axis (4),
at least one respective first cooling channel (31) running inside each of the ribs (25), which cooling channel (31) extends from the free end (34) of the respective rib (25), which free end (34) is remote from the outer structure (11), as far as the outer surface (22) of the part body (18),
the rib (25) forming a boundary of the cooling channel (31) and the cooling channel (31) lying open at the outer surface (22) of the part body (18) and being covered by the outer structure (11),
**characterised in that**
the single-piece part body (18) comprises a base structure (16) and a rib structure (19), and **in that**, viewed in the direction of the axis (4) of the combustion chamber structure (1), there is located in the base structure (16), in each case between two respective ribs (25), at least one second cooling channel (41) which is covered by the outer structure (11) on the side where the outer structure (11) is located.

2. Combustion chamber structure according to claim 1, **characterised in that** the ribs (25) extend around the axis (4) in a ring-like or helical manner.

3. Combustion chamber structure according to either claim 1 or claim 2, **characterised in that** an insert (50) is located in at least one first cooling channel (31) and restricts the through-flow space of the first cooling channel (31).

4. Combustion chamber structure according to claim 3, **characterised in that** an insert (50) is located in at least one second cooling channel (41) and restricts the through-flow space of the second cooling channel (41).

## Revendications

1. Structure de chambre de combustion (1) comportant plusieurs canaux de refroidissement (31, 41) dirigés de préférence dans la direction longitudinale de la structure de chambre de combustion (1),
cette structure de chambre de combustion (1) ayant une structure extérieure (11) et un corps de base de chambre de combustion sous la forme d'un corps partiel (18) en une seule pièce avec des nervures (25) se répétant dans la direction périphérique de la chambre de combustion,
la structure de chambre de combustion (1) étant symétrique en rotation à l'exception du corps partiel (18), par rapport à un axe (4), avec à l'intérieur des nervures (25) au moins un premier canal de refroidissement (31) qui s'étend à partir de l'extrémité libre (34) opposée à la structure extérieure (11) de la nervure respective (25) jusqu'au niveau de la surface enveloppe extérieure (22) du corps partiel (18),
la nervure (25) délimitant le canal de refroidissement (31), canal (31) qui est ouvert au niveau de la surface enveloppe (22) du corps partiel (18) pour être couvert par la structure extérieure (11),
**caractérisée en ce que**
le corps partiel (18) en une seule pièce comprend une structure de base (16) et une structure de nervures (19), et
dans la direction de l'axe (4) de la structure de chambre de combustion (1), entre chaque fois deux nervures (25) dans la structure de base (16), on a au moins un second canal de refroidissement (41) qui est couvert du côté de la structure extérieure (11) par celle-ci.

2. Structure de chambre de combustion selon la revendication 1,
**caractérisée en ce que**
les nervures (25) ont un tracé annulaire ou hélicoïdal par rapport à l'axe (4).

3. Structure de chambre de combustion selon l'une quelconque des revendications 1 ou 2,
**caractérisée en ce qu'**
au moins un premier canal de refroidissement (31) comporte un insert (50) limité par le débit à travers le premier canal de refroidissement (31).

4. Structure de chambre de combustion selon la revendication 3,
**caractérisée en ce que**
dans au moins un second canal de refroidissement (41) on a un insert (50) qui limite le débit dans le second canal de refroidissement (41).
